(19) Europäisches Patentamt
European Patent Office
Office européen des brevets

(11) Veröffentlichungsnummer: **0 108 978**
**B1**

(12) # EUROPÄISCHE PATENTSCHRIFT

(45) Veröffentlichungstag der Patentschrift: **03.09.86**

(51) Int. Cl.⁴: **C 08 G 75/02**

(21) Anmeldenummer: **83110783.4**

(22) Anmeldetag: **28.10.83**

(54) **Verfahren zur Herstellung von gegebenenfalls verzweigten Polyarylensulfiden.**

(30) Priorität: **10.11.82 DE 3241514**

(43) Veröffentlichungstag der Anmeldung: **23.05.84 Patentblatt 84/21**

(45) Bekanntmachung des Hinweises auf die Patenterteilung: **03.09.86 Patentblatt 86/36**

(84) Benannte Vertragsstaaten: **DE FR GB IT**

(56) Entgegenhaltungen:
**EP-A-0 065 689**
**DE-A-2 817 731**
**DE-A-3 030 488**
**US-A-3 354 129**
**US-A-4 297 497**

(73) Patentinhaber: **BAYER AG, Konzernverwaltung RP Patentabteilung, D-5090 Leverkusen 1 Bayerwerk (DE)**

(72) Erfinder: **Ostlinning, Edgar, Dr., Rembrandtstrasse 37, D-4000 Düsseldorf (DE)**
Erfinder: **Idel, Karsten, Dr., Scheiblerstrasse 81, D-4150 Krefeld (DE)**

EP 0 108 978 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Polyarylensulfide und ihre Herstellung sind bekannt, (z.B.US-PS 25 13 188, 25 38 941, 33 54 129, 38 76 592, JA-OS 55 54 330 (1980), DE-AS 24 53 749, DE-OS 26 23 333, 26 23 362, 26 23 363, 29 30 710, 29 30 797 und 30 19 732).

Um bei diesen Verfahren gute Ausbeuten zu erreichen muß unter erhöhtem Druck gearbeitet werden. Außerdem sind diese Verfahren auf eine kleine Zahl von Lösungsmitteln beschränkt.

Als Lösungsmittel werden z.B. bei dem Verfahren der US-PS 33 54 129 Amide, Lactame und Sulfone wie Hexamethylphosphorsäuretriamid, Tetramethylharnstoff, N,N'-Ethylendipyrrolidon-(2), Methylpyrrolidon-(2) (NMP), Pyrrolidon-(2), Caprolactam, N-Ethylcaprolactam, Sulfolan, Dimethylacetamid und niedermolekulare Polyamide angeführt. In der JA-OS 55 54 330 (1980) wird 1,3-Dimethylimidazolidinon-(2) allein bzw. im Gemisch mit N-Methylpyrrolidon als Lösungsmittel verwendet.

Bei den bekannten Druckverfahren werden Polyarylensulfide in hoher Ausbeute hergestellt. Eine Druckminderung, z.B. durch Temperaturerniedrigung reduziert jedoch drastisch die Ausbeute. Nur in N-Methylpyrrolidon und 1,3-Dimethylimidazolidinon-(2) lassen sich bei Normaldruck in akzeptabler Ausbeute Polyarylensulfide herstellen. Jedoch ist auch hier die erzielbare Ausbeute stark vom verwendeten Lösungsmittel abhängig. So wird beispielsweise bei Verwendung von N-Methylpiperidon-(2) 32 % Ausbeute, bei Verwendung von N-Methyl-pyrrolidon 54 % Ausbeute an Polyarylensulfid erzielt. Die Umsetzung wird daher stark von der Molekülstruktur des verwendeten Lösungsmittels beeinflußt. Bereits geringfügige Änderungen der Molekülstruktur des Lösungsmittels können die Ausbeuten stark reduzieren.

Es wurde nun gefunden, daß gegebenenfalls verzweigte Polyarylensulfide bei Normaldruck oder bei nur geringem Überdruck in hohen Ausbeuten hergestellt werden können, wenn man in an sich bekannter Weise Polyhalogenaromaten und Alkalisulfide in Piperazinonen als Lösungsmittel, gegebenenfalls in Anwesenheit eines Katalysators und/oder eines Cosolvenz umsetzt. Dies war nicht zu erwarten, da durch Verwendung eines Piperazinons anstelle eines Lactamring die Molekülstruktur des Lösungsmittels drastisch geändert wird.

Im erfindungsgemäßen Verfahren einsetzbare Piperazinone sind z.B. aus US-PS 26 49 450 und 42 97 497 bekannt.

Gegenstand der Erfindung ist ein Verfahren zur Herstellung von hochmolekularen gegebenenfalls verzweigten Polyarylensulfiden aus

a) 0-100 Mol%, vorzugsweise 50-100 Mol % Dihalogenaromaten der Formel

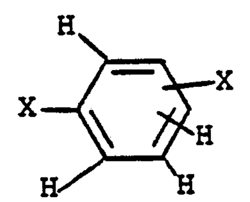

(I)

und 100-0 Mol %, vorzugsweise 0-50 Mol % Diahalogenaromaten der Formel

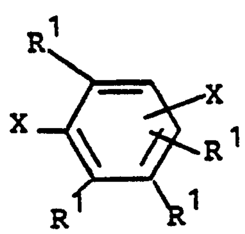

(II),

in denen

X für zueinander meta oder para-ständiges Chlor oder Brom steht und

$R^1$ gleich oder verschieden ist und Wasserstoff, Alkyl, Cycloalkyl, Aryl, Alkylaryl, Arylalkyl sein kann, wobei zwei orthoständige Reste $R^1$ zu einem aromatischen oder heterocyclischen Ring verknüpft sein können und immer ein Rest $R^1$ verschieden von Wasserstoff ist und

b) 0-3 Mol %, bevorzugt 0,1 bis 2,9 Mol-%, besonders bevorzugt 0,4 bis 2,4 Mol-%, bezogen auf die Summe der Dihalogenaromaten der Formel I und II, eines Tri- oder Tetrahalogenaromaten der Formel

$ArX_n$ (III),

wobei

Ar ein aromatischer oder heterocyclischer Rest ist,

X für Chlor oder Brom steht und

n 3 oder 4 ist und

c) Alkalisulfiden, bevorzugt Natrium- oder Kaliumsulfid oder deren Mischung, bevorzugt in Form ihrer Hydrate oder wäßrigen Mischungen, gegebenenfalls zusammen mit Alkalihydroxiden wie Natrium- und Kaliumhydroxid, wobei das molare Verhältnis von (a + b):c im Bereich von 0,85:1 bis 1,15:1, liegt in

d) einem organischen Lösungsmittel, gegebenenfalls unter Mitverwendung von Katalysatoren und/oder Cosolventien, dadurch gekennzeichnet, daß Piperazinone als organische Lösungsmittel d) eingesetzt werden und das molare Verhältnis von Alkalisulfiden c) zu dem organischen Lösungsmittel d) im Bereich von 1:2 bis 1:15 liegt und die Umsetzung bei einer Temperatur von 160°C bis 265°C, vorzugsweise 165°C bis 250°C durchgeführt wird.

Als Katalysatoren können für diesen Zweck übliche Substanzen in üblichen Mengen eingesetzt werden, beispielsweise Alkalifluoride und Alkalicarboxylate.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 100 Mol % bezogen auf 1 Mol Alkalisulfid, eingesetzt werden.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander ortho-ständige Reste $R^1$ einen ankondensierten aromatischen Ring mit insgesamt 6 C-Atomen oder einen ankondensierten heterocyclischen Ring mit 5 bis 6 Ringatomen und 1 bis 3 Heteroatomen wie N, O und S bilden.

Ar steht vorzugsweise für einen aromatischen Rest mit 6 bis 24 C-Atomen oder heterocyclischen Rest mit 6 bis 24 Ringatomen, besonders bevorzugt für einen aromatischen Rest mit 6 bis 10 C-Atomen oder heterocyclischen Rest mit 6 bis 10 Ringatomen, wobei die heterocyclischen Reste bis zu 3 Heteroatome wie N, S, O enthalten können.

Alkalisulfide werden in üblichen Mengen und in üblicher Weise eingesetzt, z.B. sind Lithium-, Natrium-, Kalium- und Rubidiumsulfid geeignet, vorzugsweise Natrium- und Kaliumsulfid. Es können Alkalisulfide eingesetzt werden, die aus Hydrogensulfiden mit Alkalihydroxiden wie LiOH, NaOH und KOH hergestellt werden. In jedem Fall können Mischungen sowohl der Sulfide als auch der Hydroxide eingesetzt werden.

Die Alkalisulfide können in einem oder mehreren Schritten, beispielsweise durch Abdestillieren des Wassers aus der Reaktionslösung, entwässert werden. Es ist ein Vorteil des erfindungsgemäßen Verfahrens, daß die Entwässerung nicht vollständig zu sein braucht. Eine partielle Entwässerung bis zu einem Restwassergehalt von etwa 1,5 Mol pro Mol $Na_2S$ ist ausreichend. Die partielle Entwässerung sollte vor der Zugabe der Dihalogenverbindung der Formel (I) und (II) abgeschlossen werden.

Eventuell als Cosolvenz verwendete N,N-Dialkylcarbonsäureamide werden bevorzugt vor der Entwässerung der Alkalisulfide eingesetzt. Es ist jedoch möglich, die Cosolventien zusammen mit den Polyhalogenverbindungen zu dem entwässerten Umsetzungsgemisch zu geben.

Das Zusammengeben der Komponenten kann in beliebiger Reihenfolge erfolgen. Die Dihalogenaromaten der Formeln (I) und (II) und die Tri- bzw. Tetrahalogenaromaten der Formel (III) können zusammen oder getrennt, kontinuierlich, in Portionen oder direkt auf einmal zu dem Alkalisulfid, dem Lösungsmittel oder einem Teil davon gegeben werden. So können beispielsweise Alkalisulfid zusammen mit dem Lösungsmittel oder einen Teil davon zu den Verbindungen der Formeln (I), (II) und (III) gegeben werden. Es können auch alle Reaktanten direkt zusammengegeben werden. Jede andere Kombination der Reaktanten ist ebenfalls möglich.

Erfindungsgemäß können Gemische aus meta- und para-Dihalogenaromaten der Formel (I) bzw. (II) eingesetzt werden. In diesem Fall soll das molare Verhältnis m:p höchstens 30:70 betragen.

Zur Herstellung thermoplastisch verarbeitbarer Polyphenylensulfide werden besonders bevorzugt p-Dihalogenaromaten eingesetzt.

Beispiele für erfindungsgemäß einzusetzende Dihalogenaromaten der Formel (I) sind: p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol, 1-Brom-4-jodbenzol, 1,3-Difluor-benzol, 1,3-Dichlorbenzol, 1,3-Dibrombenzol, 1,3-Di-jodbenzol, 1-Fluor-3-chlorbenzol, 1-Fluor-3-brombenzol, 1-Fluor-3-jodbenzol, 1-Chlor-3-jodbenzol und 1-Brom-3-jodbenzol. Sie sind allein oder im Gemisch miteinander verwendbar. Besonders bevorzugt sind 1,4-Dichlorbenzol und/oder 1,3-Dibrombenzol.

Beispielsweise für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlor-benzol, 1-Phenyl-2,5-dichlorbenzol, 1-Benzyl-2,5-dichlorbenzol, 1-Phenyl-2,5-dibrombenzol, 1-p-Tolyl-2,5-Dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol, 1-Cyclohexyl-3,5-dichlorbenzol und 1-Phenyl-3,5-difluor-benzol. Sie sind allein oder im Gemisch miteinander einsetzbar.

Beispiele für die erfindungsgemäß einzusetzenden Tri- bzw. Tetrahalogenaromaten der Formel (III) sind: 1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Tri-chlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetra-chlorbiphenyl, 1,3,5-Trichlor-triazin.

Sollen verzweigte Polyarylensulfide hergestellt werden, so müssen mindestens 0,1 Mol % eines Tri- oder Tetrahalogenaromaten der Formel (III) eingesetzt werden.

Erfindungsgemäß geeignete Piperazinone sind Verbindungen der Formel IV

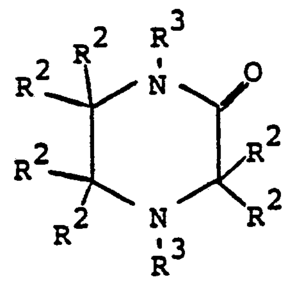

(IV),

in der

$R^2$ und $R^3$ gleich oder verschieden sein können und Wasserstoff, $C_1$-$C_8$-Alkyl,$C_6$-$C_{12}$-Aryl, $C_7$-$C_{20}$-Aral-kyl oder $C_5$-$C_{15}$-Cycloalkyl bedeutet, oder zwei Reste $R^2$ zu einem aromatischen oder cycloaliphatischen Ring verknüpft sein können.

Vorzugsweise steht $R^2$ und $R^3$ für Wasserstoff, $C_1$-$C_3$-Alkyl, $C_5$-$C_6$-Cycloalkyl, Phenyl, Benzyl, besonders bevorzugt steht $R^2$ für Wasserstoff und $R^3$ für $C_1$-$C_3$-Alkyl.

Beispielsweise seien genannt 1-Methylpiperazinon-(3), 1-Methylpiperazinon-(2), 1,4-Dimethylpiperazinon, 1-Methyl-4-isopropyl-piperazinon-(2).

Die erfindungsgemäße Umsetzung wird bei einer Temperatur von 160°C bis 265°C, vorzugsweise 165°C bis 250°C durchgeführt.

Die Reaktionszeit kann bis zu 12 Stunden betragen, vorzugsweise 1 bis 9 Stunden. Eine stufenweise Steigerung der Reaktionstemperatur während dieser Zeit kann vorteilhaft sein.

Die Aufarbeitung des Reaktionsgemisches und die Isolierung der Polyarylensulfide kann in bekannter Weise erfolgen.

Das Polyarylensulfid kann direkt aus der Reaktionslösung oder erst nach Zugabe, z.B. von Wasser und/oder verdünnten Säuren, nach üblichen Verfahrensweisen abgetrennt werden (beispielsweise durch Filtration oder durch Zentrifugieren).

Nach der Filtration schließt sich im allgemeinen zur Entfernung von anorganischen Bestandteilen, die den Polymeren anhaften können (z.B. Reste von Alkalisulfiden und Alkalichloriden) eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschließende Wäsche, wie oben beschrieben, gewonnen werden.

Die erfindungsgemäßen Polyarylensulfide können auch mit anderen Polymeren, mit Pigmenten und Füllstoffen, beispielsweise Graphit, Metallpulver, Glaspulver, Quarzmehl oder Galsfasern gemischt oder mit den für Polyarylensulfide üblichen Additiven, beispielsweise Stabilisatoren oder Entformungsmitteln, versetzt werden.

Die erfindungsgemäßen Polyarylensulfide können beispielsweise als Einbettmasse für Elektrobauteile, Dichtungsringe, Teile von Büromaschinen und Fernmeldeeinrichtungen etc. Verwendung finden.

**Beispiele**

**Vergleichsbeispiel 1**

In einem 2 l Dreihalskolben mit Thermometer, Rührer und Destillationsaufsatz werden unter Stickstoff 700 g N-Methylpyrrolidon, 226 g $Na_2S$ x $H_2O$ (≙ 1,80 Mol) und 11 l g NaOH eingewogen und auf 196°C aufgeheizt. Dabei destillierten 98,4 g Flüssigkeit ab, die im wesentlichen aus $H_2O$ bestand. Nachdem der Ansatz auf 160°C abgekühlt worden war, wurden 264,1 g p-Dichlorbenzol (≙ 1,80 Mol) und 160 g N-Methylpyrrolidon zugegeben und das Reaktionsgemisch 9 h zum Rückfluß erhitzt. Der 160°C warme Ansatz wurde in 21 destilliertes $H_2O$ gegossen. Der ausfallende Feststoff wurde mit destilliertem $H_2O$ gewaschen und anschließend bei 120°C im Wasserstrahlvakuum getrocknet. Das weiße Produkt wog 104,9 g (≙ 54,0 % Ausbeute bzg. auf p-Dichlorbenzol) und hatte einen Schmelzbereich von 272 bis 276°C.

**Vergleichsbeispiel 2**

> > erstellung von Polyphenylensulfid gemäß US-PS 3 354 129.

In einem mit Rührer ausgerüsteten Autoklaven wurden 129 g Natriumsulfid-trihydrat (entsprechend 1 Mol $Na_2S$) und 300 g N-Methyl-2-pyrrolidon zusammengegeben. Das Gemisch wurde mit Stickstoff gespült und langsam bis auf 202°C erwärmt. Dabei destillierten insgesamt 19 ml Wasser ab. Der Ansatz wurde anschließend auf ca. 160°C heruntergekühlt und 147 g p-Dichlorbenzol (≙ 1 Mol) in ca. 50 g N-Methyl-2-pyrrolidon hinzugefügt. Man erwärmt das Reaktionsgemisch unter einem Stickstoffvordruck von 2,5 bar in 30 Minuten auf 245°C, wobei der Druck auf 10 bar ansteigt, und hält diese Temperatur 3 Stunden. Nach Abkühlen auf Raumtemperatur wird ein grauer Feststoff isoliert, der anschließend mit Wasser gewaschen wird. Man trocknet bei 80°C im Vakuum und erhält 100,3 g (93 %) Poly-p-phenylensulfid mit hellbrauner Farbe und einem Schmelzbereich von 276-283°C.

**Vergleichsbeispiel 3**

Wie Vergleichsbeispiel 1 jedoch mit N-Methylpiperidin anstatt N-Methylpyrrolidon als Lösungsmittel. Es wurden 62,7 g weißes produkt (≙ 32,3 % Ausbeute) mit einem Schmelzbereich von 265 bis 273°C erhalten.

**Vergleichsbeispiel 4**

> > erstellung von p-Polyphenylensulfid gemäß JA-PS 55-54 330 (vom 21.04.1980) Beispiel 2.

In einem 500 ml Reaktionsgemäß mit $N_2$-Einlaß und Gasphasenauslaß wurden 36,06 g (≙ 0,15 Mol) Natriumsulfid nonahydrat und 150 ml N,N'-Dimethylethylenharnstoff eingewogen. Das Gemisch wurde mit Stickstoff gespült und langsam auf 200-225°C erwärmt. Dabei wurden 25,9 g Destillat, das hauptsächlich aus Wasser bestand, erhalten. Nach dem Abkühlen des Reaktionsgefäßes wurden 22,15 g (≙ 0,15 Mol) p-Dichlorbenzol zugegeben. Unter Stickstoff wurde bei Normaldruck auf 220-225°C aufgeheizt. Nach 4 Stunden wurde das Reaktionsgemisch durch Filtration abgetrennt. Das rohe Produkt wurde 4 h in etwa 1 l destilliertes Wassers bei 70°C gewaschen. Nach der Filtration wurde es 2 h bei 50°C in Methanol gewaschen. 9,39 (67,9 % Ausbeute) hellgraues Produkt mit einem Schmelzbereich von 272 bis 279°C werden erhalten.

**Beispiel 1**

Wie Vergleichsbeispiel 1, jedoch, wird als Lösungsmittel 1,4-Dimethyl-piperazinon eingesetzt.

Das weiße Produkt wog 154,1 g (≙ 79,2 % Ausbeute) und hatte einen Schmelzbereich von 278-283°C.

**Beispiel 2**

Wie Beispiel 1, jedoch wurden zusätzlich zum $Na_2S \times H_2O$ 91,8 g Lithiumacetatdihydrat (50 Mol % bzg. auf $Na_2S$) eingesetzt.

163,6 g weißes produkt (84,2 % Ausbeute) mit einem Schmelzbereich von 277-283°C wurden isoliert.

**Beispiel 3** (Herstellung eines verzweigten polyarylensul-

fides)

Wie Beispiel 1, jedoch wurden zusätzlich 24,2 g (15 Mol %, bzg. auf $Na_2S$) Dimethylacetamid und 2,5 g 1,2,4-Trichlorbenzol (0,77 Mol % bzg auf Dichlorbenzol) eingesetzt. Das weiße Produkt wog 161,9 g (83,3 % Ausbeute bzg. auf $Na_2S$) und hatte einen Schmelzbereich von 279-284°.

**Beispiel 4** (Herstellung eines verzweigten Polyarylensul-

fides)

In einem mit Rührer ausgerüsteten Autoklaven wurden 95,8 g (0,75 Mol) Natriumsulfidhydrat 5,0 g (0,056 Mol) 45 % NaOH, 61,5 g (0,75 Mol) Natriumacetat und 300 g 1,4-Dimethylpiperazinon einwogen. Das Gemisch wurde

mit $N_2$ gespült und langsam bis auf 200° C erwärmt. Dabei destillierten 15 ml einer Flüssigkeit ab, die im wesentlichen aus $H_2O$ bestand. Nach Zugabe von 110,3 g (0,75 Mol) p-Dichlorbenzol und 1,36 g (1 Mol % bzg. auf p-Dichlorbenzol) 1,2,4-Trichlorbenzol zusammen mit 35 g 1,4-Di-methylpiperazinon wurde der Autoklav verschlossen und innerhalb 1 h auf 245° C erhitzt, wobei der Druck auf 4,5 bar anstieg. Nach 7 h wurde auf Raumtemperatur abgekühlt und das Produkt gründlich mit Wasser zur Entfernung entstandener Salze gewaschen. Nach dem Trocknen bei 120° C im Wasserstrahlvakuum wog das hellgraue Produkt 75,3 g (92,9 % Ausbeute bzg. auf Dichlorbenzol). Es hatte einen Schmelzbereich von 278-284° C.

**Patentansprüche**

1. Verfahren zur Herstellung von hochmolekularen gegebenenfalls verzweigten Polyarylensulfiden aus
a) 0-100 Mol %, vorzugsweise 50-100 Mol % Dihalogenaromaten der Formel

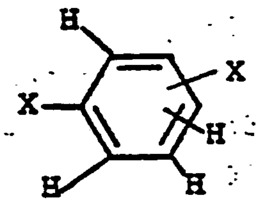

(I)

und 100-0 Mol %,vorzugsweise 0-50 Mol % Dihalologenaromaten der Formel

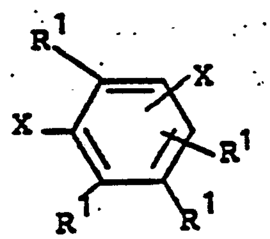

(II),

in denen
X für zueinander meta oder para-ständiges Chlor oder Brom steht und
$R^1$ gleich oder verschieden ist und Wasserstoff, Alkyl, Cycloalkyl, Aryl, Alkylaryl, Arylalkyl sein kann, wobei zwei Reste $R^1$ zu einem aromatischen oder heterocyclischen Ring verknüpft sein können und immer ein Rest $R^1$ verschieden von Wsserstoff ist und
b) 0-3 Mol %, bezogen auf die Summe der Dihalogenaromaten der Formel I und II eines Tri- oder Tetrahalogenaromaten der Formel
$ArX_n$ (III)
wobei
Ar ein aromatischer oder heterocyclischer Rest ist,
X für Chlor oder Brom steht und
n 3 oder 4 ist und
c) Alkalisulfiden, gegebenenfalls zusammen mit Alkalihydroxiden, wobei das molare Verhältnis von (a+b): c in Bereich von 0,85:1 bis 1,15:1, liegt und
d) einem organischen Lösungsmittel, gegebenenfalls unter Mitverwendung von Katalysatoren und/oder Cosolventien, dadurch gekennzeichnet, daß Piperazinone als organische Lösungsnittel d) eingesetzt werden und das molare Verhältnis von Alkalisulfiden c) zu den organischen Lösungsmittel d) in Bereich von 1:2 bis 1:15 liegt, und die Umsetzung bei einer Temperatur von 160° C bis 265° C durchgeführt wird.
2. Verfahren nach Anspruch 1, dadurch gekennzeichnet, daß Piperazinone der Formel

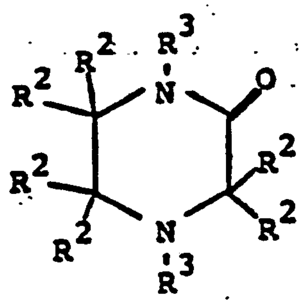

(IV)

worin
$R^2$ und $R^3$ gleich oder verschieden sein können und Wasserstoff, $C_1$-$C_8$-Alkyl, $C_6$-$C_{12}$-Aryl, $C_7$-$C_{20}$-Aral-kyl oder $C_5$-$C_{15}$-Cycloalkyl bedeuten, oder zwei Reste $R^2$ zu einem aromatischen oder cycloaliphatischen Ring verknüpft sein können, als organisches Lösungsmittel d) eingesetzt werden.

3. Verfahren nach Anspruch 1, dadurch gekennzeichnet, daß die Umsetzung bei Temperaturen von 165° C bis 250° C durchgeführt wird.

4. Verfahren nach Anspruch 1 und 2, dadurch gekennzeichnet, daß 1,4-Dimethylpiperazinon als Lösungsmittel eingesetzt wird.

5. Verfahren nach den Ansprüchen 1-3, dadurch gekennzeichnet, daß als Cosolvenz 0,02 bis 100 Mol %, bezogen auf eingesetztes Alkalisulfid, eines N,N-Dialkylcarbonsäureamides eingesetzt wird.

6. Verfahren nach den Ansprüchen 1-4, dadurch gekennzeichnet, daß 1,4-Dichlorbenzol und/oder 1,4-Dibrombenzol als Dihalogenaromat eingesetzt wird.

**Claims**

1. Process for the production of high molecular weight optionally branched polyarylene sulphides from
a) 0-100 mol %, preferably 50-100 mol % of dihalogen aromatic compounds of the formula

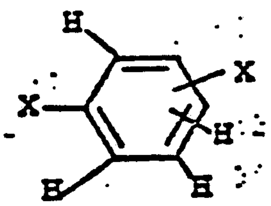

(I)

and l00-0 mol %, preferably 0-50 mol % of dihalogen aromatic compounds of the formula

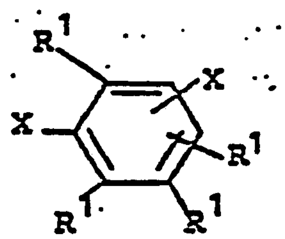

(II),

in which
X represents chlorine or bromine in a meta or para position to one another and
$R^1$ is identical or different and can be hydrogen, alkyl, cycloalkyl, aryl, alkylaryl or arylalkyl, it being possible for two radicals $R^1$ to be linked to form an aromatic or heterocyclic ring and one radical $R^1$ is always different from hydrogen and
b) 0-3 mol %, based on the sum of the dihalogen aromatic compounds of the formula I and II, of a tri- or tetrahalogem aromatic compound of the formula

$$ArX_n \qquad (III)$$

wherein
Ar is an aromatic or heterocyclic radical,
X represents chlorine or bromine and

n is 3 or 4 and

c) alkali sulphides, optionally together with alkali hydroxides, the molar ratio of (a+b): c being in the range from 0.85:1 to 1.15:1, and

d) an organic solvent, optionally also using catalysts and/or cosolvents, characterised in that piperazinonas are used as the organic solvents d) and the molar ratio of alkali sulphides c) to the organic solvent d) is in the range from 1:2 to 1:15 and the reaction is carried out at a temperature of 160° C to 265° C.

2. Process according to Claim 1, characterised in that piperazinones of the formula

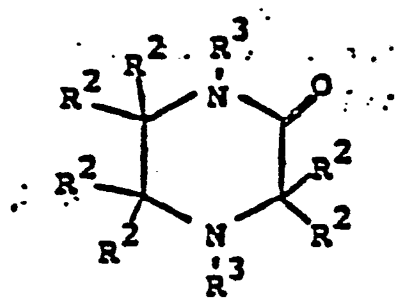

(IV)

wherein

$R^2$ and $R^3$ can be identical or different and denote hydrogen, $C_1$-$C_8$ alkyl, $C_6$-$C_{12}$ aryl, $C_7$-$C_{20}$ aralkyl or $C_5$-$C_{15}$ cycloalkyl, or two radicals $R^2$ can be linked to form an aromatic or cycloaliphatic ring, are used as the organic solvent d).

3. Process according to Claim 1, characterised in that the reaction is carried out at temperatures of 165° C to 250° C.

4. Process according to Claim 1 and 2, characterised in that 1,4-dimethylpiperazinone is used as the solvent.

5. Process according to Claims 1-3, characterised in that 0.02 to 100 mol %, based on the alkali sulphide used, of an N,N-dialkylcarboxylic acid amide are used as the cosolvent.

6. Process according to Claims 1-4, characterised in that 1,4-dichlorobenzene and/or 1,4-dibromobenzene is used as the dihalogen aromatic compound.

**Revendications**

1. Procédé de préparation de sulfures de polyarylène à haut poids moléculaire, éventuellement ramifiés, à partir de:

a) 0 a 100 mol/%, de preference 50 a 100 mol/%, de composés aromatiques dihalogénés de formule

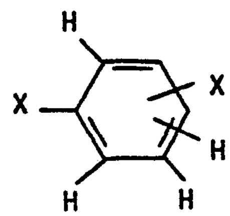

(I)

et 100 à 0 mol%, de préference 0 à 50 mol%, de composés aromatiques dihalogénés de formule

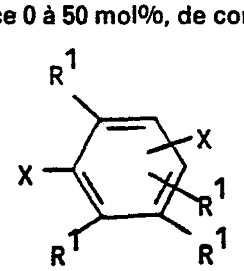

(II)

dans lesquels

X représente le chlore ou le brome en position mutuelle méta ou para et

les symboles $R^1$, ayant des significations identiques ou différentes, représentent chacun l'hydrogène, un groupe alkyle, cycloalkyle, aryle, alkylaryle, arylalkyle, deux restes $R^1$ pouvant être reliés avec formation d'un noyau aromatique ou hétérocyclique, et un symbole $R^1$ ayant toujours une signification autre que l'hydrogène, et

b) 0 à 3 mol%, par rapport à la somme des composés aromatiques dihalogénés de formules I et II, d'un composé aromatique tri- ou tétra-halogéné de formule

$ArX_n$ (III)

dans laquelle
Ar représente un noyau aromatique ou hétérocyclique,
X représente le chlore ou le brome, et
n est égal à 3 ou 4, et

c) des sulfures alcalins, éventuellement avec des hydroxydes alcalins, le rapport molaire (a+b):c se situant dans l'intervalle de 0,85:1 à 1,15:1 et

d) un solvent organique, éventuellement avec utilisation conjointe de catalyseurs et/ou de cosolvants, ce procédé se caractérisant en ce que l'on utilise en tant que solvents organiques d) des pipérazinones, en ce que le rapport molaire des sulfures alcalins c) au solvant organique d) se situe dans l'intervalle de 1:2 à 1%15 en ce que la réaction est effectuée à une température de 160 à 265°C.

2. Procédé selon la revendication 1, caractérisé en ce que l'on utilise des pipérazinones de formule

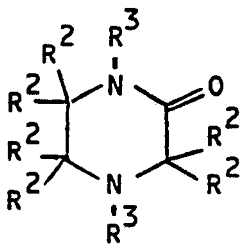

(IV)

dans laquelle
$R^2$ et $R^3$, qui peuvent avoir des significations identiques ou differentes, représentent l'hydrogéne, des groupes alkyle en $C_1$-$C_8$, aryle en $C_6$-$C_{12}$ aralkyle en $C_7$-$C_{20}$ ou cycloalkyle en $C_5$-$C_{15}$ ou bien deux restes $R^2$ sont reliés entre eux en formant un noyau aromatique ou cycloaliphatique, en tant que solvants organiques d).

3. Procédé selon la revendication 1, caractérisé en ce que la réaction est effectuée à des températures de 165 à 250°C.

4. Procédé selon les revendications 1 et 2, caractérisé en ce que l'on utilise en tant que solvant la 1,4-diméthylpipérazinone.

5. Procédé selon les revendcations 1 à 3, caractérisé en ce que l'on utilise en tant que cosolvant, en proportions de 0,02 à 200 mol%, par rapport au sulfure alcalin mis en oeuvre, un N,N-dialkylcarboxyamide.

6. Procédé selon les revendcations 7 à 4, caractérisé en ce que l'on utilise en tant que composés aromatiques dihalogénés le 1,4-dichlorobenzène et/ou le 1,4-dibromobenzène.